# EUROPÄISCHE PATENTSCHRIFT

(11) **EP 2 283 251 B1**
(45) Veröffentlichungstag und Bekanntmachung des Hinweises auf die Patenterteilung: **12.10.2011**
(21) Anmeldenummer: 09737736.0
(22) Anmeldetag: 28.04.2009
(51) Int. Cl.: F16H 3/00, F16H 3/097

(54) **DOPPELKUPPLUNGSGETRIEBE**
DUAL-CLUTCH TRANSMISSION
BOÎTE DE VITESSES À DOUBLE EMBRAYAGE

(30) Priorität: 28.04.2008 DE 102008021133; 24.09.2008 DE 102008048799
(43) Veröffentlichungstag der Anmeldung: 16.02.2011
(73) Patentinhaber: GIF Gesellschaft für Industrieforschung mbH, 52477 Alsdorf (DE)
(72) Erfinder: BARTLING, Tim, 52062 Aachen (DE); NISSEN, Peter, 52159 Rötgen (DE); ZAKI, Nadir, 52062 Aachen (DE)
(74) Vertreter: Reuther, Martin
(86) Internationale Anmeldenummer: PCT/DE2009/000586
(87) Internationale Veröffentlichungsnummer: WO 2009/132628

(56) Entgegenhaltungen:
- WO-A-2008/058974
- DE-A1- 10 316 070
- DE-A1-102004 044 953

## Beschreibung

Die Erfindung betrifft einerseits ein Getriebe mit zwei koaxial zueinander angeordneten Getriebeeingangswellen, mit zwei Vorgelegewellen, auf denen als Losräder ausgebildete Gangzahnräder drehbar gelagert sind, mit auf den beiden Getrlebeeingangswellen drehfest und in axialer Folge angeordneten sowie als Festräder ausgebildeten Gangzahnrädern, die mit den Losrädern mittelbar oder unmittelbar in Zahneingriff stehen und hierdurch verschiedene Gänge definieren, mit Koppelvorrichtungen, die drehfest und axial bewegbar auf den beiden Vorgelegewellen gelagert und mittels Stellvorrichtungen axial zu bewegen sind, um jeweils ein Losrad drehfest mit der entsprechenden Vorgelegewelle zu verbinden, und mit jeweils einem an den beiden Vorgelegewellen befestigten Abtriebszahnrad, die mit einer Verzahnung eines Abtriebs im Zahneingriff stehen, wobei ein Rückwärtsgang durch eine Zwischenwelle, auf welcher ein erstes Zwischenwellenfestrad, welches mit einem Losrad der Losräder unmittelbar in Zahneingriff steht, und ein zweites Zwischenwellenfestrad, welches mit einem den ersten Gang G1 definierenden Festrad der Festräder unmittelbar in Zahneingriff steht, drehfest angeordnet sind, definiert ist. Andererseits betriff die Erfindung insbesondere ein Doppelkupplungsgetriebe mit zwei Kupplungen.

Derartige, insbesondere als Doppelkupplungsgetriebe ausgestaltete, Getriebe mit zwei koaxial zueinander angeordneten Getriebeeingangswellen, mit zwei Vorgelegewellen auf denen als Losräder ausgebildete Gangzahnräder drehbar gelagert sind, mit auf den beiden Getriebeeingangswellen drehfest und in axialer Folge angeordneten sowie als Festräder ausgebildeten Gangzahnrädern, die mit den Losrädern mittelbar oder unmittelbar in Zahneingriff stehen und hierdurch verschiedene Gänge definieren, mit Koppelvorrichtungen, die drehfest und axial bewegbar auf den beiden Vorgelegewellen gelagert und mittels Stellvorrichtungen axial zu bewegen sind, um jeweils ein Losrad drehfest mit der entsprechenden Vorgelegewelle zu verbinden, und mit jeweils einem an den beiden Vorgelegewellen drehfest befestigten Abtriebszahnrad, die mit einer Verzahnung eines Abtriebs im Zahneingriff stehen, sind an sich aus dem Stand der Technik, beispielsweise aus der DE 103 05 241 A1 oder aus der DE 10 2004 032 498 A1, hinlänglich bekannt. Hierbei offenbart insbesondere die DE 10 2004 032 498 A1 einen Rückwärtsgang, der durch eine Zwischenwelle, auf welcher ein erstes Zwischenwellenfestrad, welches mit einem bestimmten Losrad der Losräder unmittelbar in Zahneingriff steht, und ein zweites Zwischenwellenfestrad, welches mit einem den ersten Gang definierenden Festrad der Festräder unmittelbar in Zahneingriff steht, drehfest angeordnet sind, definiert ist, um auf diese Weise ein besonders kompaktes Getriebe bereitzustellen.

Ein Doppelkupplungsgetriebe mit den Merkmalen nach dem Oberbegriff des Anspruchs 1 ist in Figur 5 der DE 10 2004 044 953 A1 offenbart. Des weiteren ist ein Doppelkupplungsgetriebe mit den Merkmalen nach dem Oberbegriff des Anspruchs 1, bei dem zusätzlich das erste Zwischenwellenfestrad auf axialer Höhe des den zweiten Gang definierenden Festrads angeordnet ist, aus der WO 2008/058974 A1 bekannt, welche im Prioritätsintervall des vorliegenden Patents veröffentlicht wurde.

Es ist hiervon ausgehend Aufgabe vorliegender Erfindung, ein kompaktes Getriebe, insbesondere ein kompaktes Doppelkupplungsgetriebe bereitzustellen, welches gleichwohl sehr stabil und gleichförmig auch hinsichtlich einer wechselnden Momentenbelastung ist.

In Anspruch 1 wird ein Doppelkupplungsgetriebe mit zwei koaxial zueinander angeordneten Getriebeeingangswellen, mit zwei Vorgelegewellen, auf denen als Losräder ausgebildete Gangzahnräder drehbar gelagert sind, mit auf den beiden Getriebeeingangswellen drehfest und in axialer Folge angeordneten sowie als Festräder ausgebildeten Gangzahnrädern, die mit den Losrädern mittelbar oder unmittelbar in Zahneingriff stehen und hierdurch verschiedene Gänge definieren, mit Koppelvorrichtungen, die drehfest und axial bewegbar auf den beiden Vorgelegewellen gelagert und mittels Stellvorrichtungen axial zu bewegen sind, um jeweils ein Losrad drehfest mit der entsprechenden Vorgelegewelle zu verbinden, mit jeweils einem an den beiden Vorgelegewellen befestigten Abtriebszahnrad, die mit einer Verzahnung eines Abtriebs im Zahneingriff stehen und mit zwei Kupplungen, deren Eingangsseiten mit einer Antriebswelle eines Antriebsmotors und deren Ausgangsseiten mit jeweils einer der beiden koaxial zueinander angeordneten Getriebeeingangswellen verbunden sind, wobei ein Rückwärtsgang durch eine Zwischenwelle, auf welcher ein erstes Zwischenwellenfestrad, welches mit einem Losrad der Losräder unmittelbar in Zahneingriff steht, und ein zweites Zwischenwellenfestrad, welches mit einem den ersten Gang definierenden Festrad der Festräder unmittelbar in Zahneingriff steht, drehfest angeordnet sind, definiert ist, vorgeschlagen, bei welchem das den ersten Gang und den Rückwärtsgang definierende Festrad in der axialen Folge axial außen angeordnet ist. Auf diese Weise kann dieses Festrad in unmittelbarer Nähe eines Lagers angeordnet werden, so dass Lasten, die während des Normalbetriebs oder auch bei Momentenwechseln auftreten können, insbesondere demnach die Zahneingriffskräfte bzw. Schwingungen, wie sie insbesondere bei einem Momentenwechsel auftreten können, minimiert werden.

Das den zweiten Gang definierende Festrad ist gemäß Anspruch 1 ebenfalls axial außen, und zwar auf der dem Festrad abgewandten Seite der axialen Folge, angeordnet. Auf diese Bauweise sind die am stärksten von Lasten und Momentenwechseln belasteten Räder, insbesondere die jeweiligen Lösräder mit ihren großen Radien, in der Nähe von Lagern angeordnet, so dass die jeweiligen Drehmomente bzw. Kräfte entsprechend gut aufgefangen werden können. Gerade bei niedrigeren Gängen, also insbesondere beim ersten und zweiten Gang, sind bei gleichem Leistungsspektrum des jeweilig antreibenden Motors die aus den Drehmomenten des Motors resultierenden Lasten wegen der Radien der jeweiligen Zahnräder, insbesondere der jeweiligen Losräder, am größten.

Dieses gilt insbesondere dann, wenn gemäß Anspruch 1 das erste Zwischenwellenfestrad auf axialer Höhe des den zweiten Gang definierenden Festrades angeordnet ist, so dass auch hier eine Lagerung möglichst in sehr kurzer Entfernung gewährleistet werden kann.

Ist gemäß Anspruch 2 das den ersten Gang und den Rückwärtsgang definierende Festrad axial auf einer den Kupplungen abgewandten Seite, und ggf. gemäß Anspruch 3 das den zweiten Gang definierende Festrad axial auf einer den Kupplungen zugewandten Seite, angeordnet, bedingt dieses eine verhältnismäßig große Länge der Welle zu den beiden häufig und unter großen Lasten genutzten Anfahrtsgängen, nämlich zu dem ersten Gang und dem Rückwärtsgang, die es nach dem Stand der Technik eigentlich zu vermeiden gilt. Andererseits wird dieses in erfindungsgemäßer Weise durch die Nähe zu einem Lager in seinen schädlichen Einflüssen gerade minimiert, wobei in vielen Zusammenhängen ein Anfahren im zweiten Gang bevorzugt wird, was bei einer derartigen Anordnung gerade zu einem kurzen Weg, und somit zu verhältnismäßig geringen Verwindungen, führt.

Insbesondere bei einer derartigen Ausgestaltung kann es von Vorteil sein, wenn gemäß Anspruch 4 die beiden Getriebeeingangswellen miteinander kuppelbar sind, so dass beide Kupplungen beim Anfahren genutzt werden können.

Andererseits kann es von Vorteil sein, wenn das den ersten Gang und den Rückwärtsgang definierende Festrad axial auf einer den Kupplungen zugewandten Seite angeordnet ist. Ergänzend kann gemäß Anspruch 5 das den zweiten Gang definierende Festrad axial auf einer den Kupplungen abgewandten Seite ungeordnet sein. Eine derartige Ausgestaltung beseitigt die vorstehend bei der alternativ aufgeführten Ausgestaltung genannten Nachteile und nutzt insbesondere ergänzend den Vorteil der erfindungsgemäßen Anordnung, dass lediglich eine der beiden Kupplungen, nämlich die Kupplung zum ersten Gang und zum Rückwärtsgang, eigentlich für Anfahrtzwecke genutzt wird. Diese Kupplung kann dann entsprechend größer bzw. belastbarer ausgelegt werden.

Gemäß Anspruch 1 sind bei der vorgeschlagenen Lösung die beiden Kupplungen axial auf gleicher Höhe oder mit einer Überlappung von mehr als 50%, und radial auf verschiedenen Radien zueinander angeordnet sind, so dass eine unterschiedliche Auslegung schon durch die verschiedenen Radien bedingt ist.

So kann es weiter von Vorteil sein, wenn gemäß Anspruch 6 die mit dem den ersten Gang und den Rückwärtsgang definierenden Festrad verbundene Kupplung radial außerhalb angeordnet ist, so dass diese auf Grund ihres größeren Radius auch größere Drehmomente übertragen kann. Hierbei gilt im Wesentlichen, dass das über eine Kupplung übertragbare Moment proportional zur Klemmkraft, dem Reibbeiwert in der Kupplung, dem Radius und der Zahl der Reibflächen ist.

Üblicher Weise haben die beiden Kupplungen eines Doppelkupplungsgetriebes jeweils mehrere Kupplungslamellen, die in der Regel je Kupplung jeweils nebeneinander, beispielsweise als antreibende Stahllamellen und abtreibende Reiblamellen oder als abtreibende Stahllamellen und antreibende Reiblamellen, angeordnet sind und gemeinsam aufeinander gepresst werden können, was zu einer gewissen axialen Erstreckung führt, wobei eine derartige axiale Erstreckung der jeweiligen Kupplungen auch bei jeweils lediglich zwei Kupplungsflächen, die entsprechend gegeneinander gepresst werden, naturgemäß vorhanden sein muss, da die Baugruppen, welche diese Kupplungsflächen tragen, eine gewisse Verstreckung aufweisen. Insoweit bezeichnet der Begriff von "axial auf gleicher Höhe angeordneten Kupplungen" nicht zwingend, dass die axiale Verstreckung beider Kupplungen gleich ist und ihre senkrecht zur Rotationsachse liegenden Mittelebenen ineinander liegen müssen. Vielmehr reicht es schon aus, wenn lediglich jeweils eine Baugruppe einer Kupplung auf axial gleicher Höhe wie eine andere Baugruppe der zweiten Kupplung liegt.

Sind die beiden Getriebeeingangswellen gemäß Anspruch 7 miteinander kuppelbar, kann eine Leistung gleichzeitig mittels beider Getriebeeingangswellen auf eine Vorgelegewelle des Doppelkupplungsgetriebes übertragen werden. Dieses hat den Vorteil, dass die Kuppelkräfte beider Kupplungen genutzt werden können, so dass insbesondere in Anfahrsituationen größere Drehmomente übertragen bzw. die einzelnen Kupplungen geschont werden können. Das Kuppeln beider Getriebeeingangswellen gehen andererseits die eigentlichen Vorteile eines Doppelkupplungsgetriebes verloren, da dann ein prophylaktisches Einlegen bzw. Synchronisieren eines an sich noch nicht genutzten Ganges nicht möglich ist. Andererseits kann die Kupplung zwischen den beiden Getriebeeingangswellen in der Regel sehr schnell gelöst werden, da größere Drehmomente in der Regel lediglich sehr kurzzeitig übertragen werden müssen, so dass dann die Vorteile eines Doppelkupplungsgetriebes unmittelbar wieder genutzt werden können.

Insbesondere im Einsatz eines Kraftfahrzeuges ist es vorteilhaft, wenn gemäß Anspruch 8 der Abtrieb ein Differential umfasst, wodurch das Doppelkupplungsgetriebe besonders kompakt in dem Kraftfahrzeug bereitgestellt werden kann.

Weitere Vorteile, Ziele und Eigenschaften vorliegender Erfindung werden anhand nachfolgender Beschreibung anliegender Zeichnung erläutert, in welcher beispielhaft Getriebe dargestellt sind, bei welchen jeweils ein einen ersten Gang und einen Rückwärtsgang definierendes Festrad in axialer Folge axial außen angeordnet ist. Komponenten, welche in den Figuren wenigsten im Wesentlichen hinsichtlich ihrer Funktion übereinstimmen, können hierbei mit gleichen Bezugsziffern gekennzeichnet sein, wobei diese Komponenten nicht in allen Figuren beziffert und erläutert sein müssen.

In der Zeichnung zeigern:
- Figur 1: eine schematische Liniendarstellung eines erfindungsgemäßen Getriebes mit Getriebeeingangswellen und Vorgelegewellen;

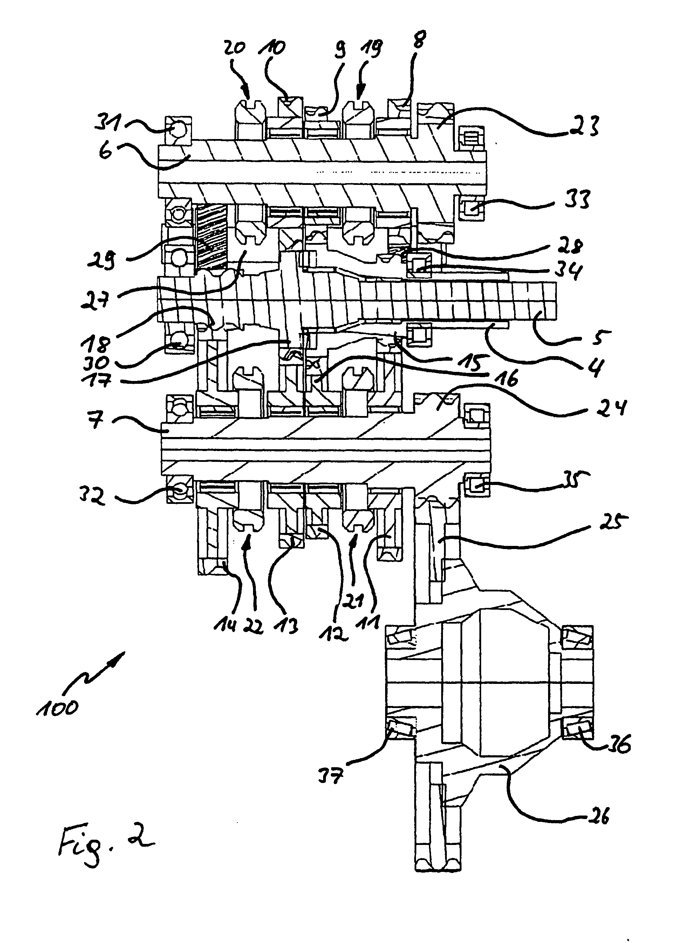

- Figur 2: eine schematische Schnittdarstellung des Getriebes nach Figur 1;
- Figur 3: eine schematische Seitenansicht der wesentlichen Räder und Wellen des Getriebes nach den Figuren 1 und 2

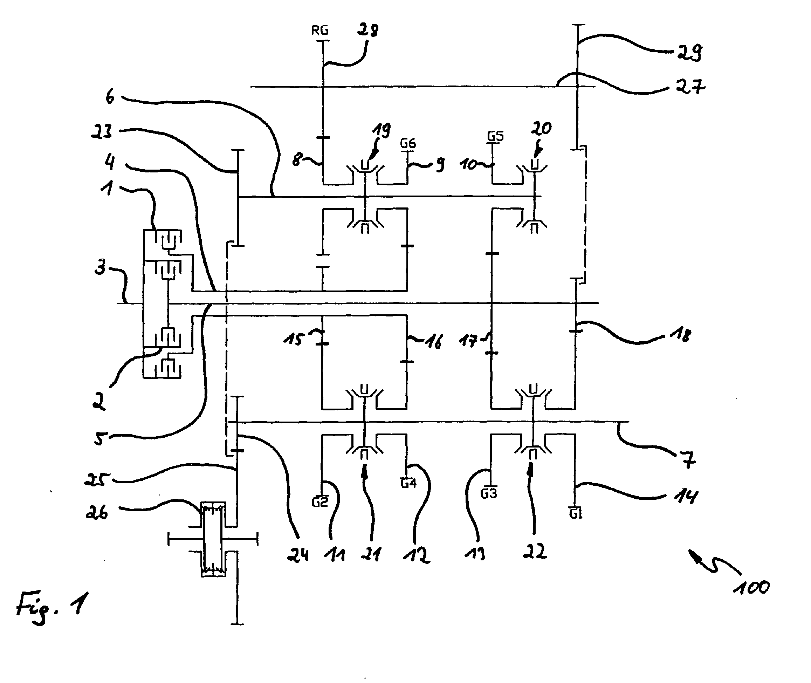

Bei dem in Figur 1 beispielhaft gezeigten Getriebe 100 handelt es sich um ein Doppelkupplungsgetriebe mit einer ersten Kupplung 1 und einer zweiten Kupplung 2. Die beiden Kupplungen 1 und 2 sind mit einer Antriebswelle 3 eines hier nicht näher gezeigten Antriebsmotors drehfest verbunden. Bei dem Antriebsmotor kann es sich um eine Brennkraftmaschine handeln, welche vorzugsweise in einem Kraftfahrzeug eingesetzt ist.

Dementsprechend ist die erste Kupplung 1 mit einer ersten Getriebeeingangswelle 4 wirkverbunden, wobei die erste Getriebeeingangswelle 4 als eine Hohlwelle ausgebildet ist. Dementsprechend ist die zweite Kupplung 2 mit einer zweiten Getriebeeingangswelle 5 wirkverbunden, wobei die zweite Getriebeeingangswelle 5 als eine Vollwelle ausgebildet ist.

Darüber hinaus weist das Getriebe 100 eine erste Vorgelegewelle 6 sowie eine zweite Vorgelegewelle 7 auf. An der ersten Vorgelegewelle 6 sind ein erstes Losrad 8, ein zweites Losrad 9 und ein drittes Losrad 10 des Doppelkupplungsgetriebes vorgesehen. Weitere Losräder 11, 12, 13 und 14 sind der zweiten Vorgelegewelle 7 zugeordnet, so dass mit den beiden Vorgelegewellen 6 und 7 insgesamt sieben Losräder 8 bis 14 an dem Doppelkupplungsgetriebe bereit gestellt sind. Mit den Losrädern 8 bis 14 der beiden Vorgelegewellen 6 und 7 können jeweils Festräder 15, 16, 17 bzw. 18 der beiden Getriebeeingangswellen 4 bzw. 5 wechselwirken.

Hierbei sind das erste Festrad 15 und das zweite Festrad 16 der ersten Getriebeeingangswelle 4 zugeordnet, während das dritte Festrad 17 und das vierte Festrad 18 der zweiten Getriebeeingangswelle 5 zugeordnet sind.

Durch das Zusammenspiel der Festräder 15 bis 18 und der Losräder 8 bis 14 können an dem Getriebe 100 insgesamt sechs Vorwärtsgänge G1 bis G6 und ein Rückwärtsgang RG realisiert werden.

Zum Realisieren des ersten Ganges G1 kann das vierte Festrad 18, welches von der zweiten Getriebeeingangswelle 5 getragen wird, mit dem siebten Losrad 14 der zweiten Vorgelegewelle 7 kämmen. Bezüglich des zweiten Ganges G2 kämmt das vierte Losrad 11 mit dem Festrad 15, welches von der ersten Getriebeeingangswelle 4 getragen wird. Hinsichtlich des dritten Ganges G3 kann das sechste Losrad 13 mit dem dritten Festrad 17 kämmen, und der vierte Gang G4 wird mittels des fünften Losrades 12 und des zweiten Festrades 16 umgesetzt. Durch Wechselwirken des dritten Losrades 10 mit dem dritten Festrad 17 kann der fünfte Gang G5 des Doppelkupplungsgetriebes bereit gestellt werden und sechste Gang G6 wird durch Wechselwirkung mit dem zweiten Festrad 16 und dem zweiten Losrad 9 ermöglicht.

Damit das erste Getriebe 100 möglichst kompakt baut, umfasst es Koppelvorrichtungen 19, 20, 21 und 22, über welche jeweils zwei sich axial gegenüberliegende Losräder 8 bzw. 9, 11 bzw. 12 oder 13 bzw. 14 mit ihrer jeweils zugeordneten Vorgelegewelle 6 oder 7 gekoppelt bzw. entkoppelt werden können. So können beispielsweise das sechste Losrad 13 des dritten Ganges G3 und das siebte Losrad 14 des ersten Ganges G1 mittels einer einzigen, nämlich der vierten Koppelvorrichtung 22 mit der zweiten Vorgelegewelle 7 gekoppelt werden. Ähnliche bauliche Verhältnisse bestehen hinsichtlich des zweiten Ganges G2 und des vierten Ganges G4 in Bezug auf das vierte Losrad 11 bzw. das fünfte Losrad 12, welche über die dritte Koppelvorrichtung 21 mit der zweiten Vorgelegewelle 7 in Wirkkontakt treten können. Des weiteren können mit der ersten Koppelvorrichtung 19 entweder das erste Losrad 8 oder das zweite Losrad 9 mit der ersten Vorgelegewelle 6 wirkverbunden werden, so dass entweder der sechste Gang G6 oder der Rückwärtsgang RG an dem Getriebe 100 eingestellt werden können. Mittels der zweiten Koppelvorrichtung 20 kann jedoch nur das dritte Loslager 10 mit der ersten Vorgelegewelle 6 wirkverbunden werden, wodurch dann der fünfte Gang G5 an dem Doppelkupplungsgetriebe eingestellt werden kann.

Dementsprechend eingestellt, kann entweder die erste Vorgelegewelle 6 mittels eines ersten Abtriebszahnrades 23 oder die zweite Vorgelegewelle 7 mittels eines Abtriebszahnrades 24 eine Antriebsleistung von der Antriebswelle 3 auf eine Verzahnung 25 eines Differenzials 26 übertragen.

Vorteilhafter Weise kann mittels des vierten Festrades 18 auch eine Zwischenwelle 27 angetrieben werden, um den Rückwärtsgang RG an dem Getriebe 100 bei Bedarf einstellen zu können. Hierzu ist die Zwischenwelle 27 einerseits mit einem ersten Zwischenwellenfestrad 28 mit dem ersten Losrad 8 der ersten Vorgelegewelle 6 wirkverbunden, während die Zwischenwelle 27 andererseits mittels eines zweiten Zwischenwellenfestrades 29 mit dem vierten Festrad 18 wechselwirken kann.

Vorteilhafter Weise ist das den ersten Gang G1 und den Rückwärtsgang RG definierende vierte Festrad 18 des Getriebes 100 in einer axialen Folge axial außen angeordnet, wodurch insbesondere das vierte Festrad 18 vorteilhafter Weise in unmittelbarer Nähe eines ersten Wellenlagers 30 angeordnet werden kann. Insofern können auf Grund einer derartigen vorteilhaften Lagerung Schwingungen stark reduziert werden, wie sie insbesondere bei einem Momentenwechsel auftreten können.

Bei dem ersten Wellenlager 30 handelt es sich um eine Lagerung, mittels welcher die zweite Getriebeeingangswelle 5 gelagert werden kann. Vorteilhafter Weise ist das den zweiten Gang G2 definierende erste Festrad 15 des Getriebes 100 axial ebenfalls außen auf der dem vierten Festrad 18 abgewandten Seite der axialen Folge angeordnet, so dass bei der vorliegenden Konstruktion das erste Zwischenwellenfestrad 28 auf axialer Höhe des den zweiten Gang G2 definierenden ersten Festrades 15 angeordnet ist, so dass die jeweiligen an den Rädern des Getriebes 100 angreifenden Drehmomente entsprechend gut von dem Gehäuse des Getriebes 100 aufgenommen werden können.

Die Wellenanordnung des Getriebes 100 weist darüber hinaus weitere Wellenlager 31 bis 35 auf, mittels welchen nicht nur die beiden Getriebeeingangswellen 4 und 5 vorteilhaft gelagert werden können, sondern auch die beiden Vorgelegewellen 6 und 7 sowie die Zwischenwelle 27.

Hierbei sind die beiden Getriebeeingangswellen 4 und 5 einerseits mit dem bereits erläuterten ersten Wellenlager 30 und andererseits mit dem fünften Wellenlager 34 gelagert.

Die erste Vorgelegewelle 6 ist mittels des zweiten Wellenlagers 31 und des vierten Wellenlagers 33 gelagert, während die zweite Vorgelegewelle 7 mittels des dritten Wellenlagers 32 und des sechsten Wellenlagers 35 gelagert ist. Vorteilhafter Weise befinden sich nicht nur das erste Wellenlager 30 und das zweite Wellenlager 31 auf einer axialen Höhe sondern auch das dritte Wellenlager. Hierdurch baut die Lageranordnung des Getriebes 100 besonders steif.

Das Differenzial 26 ist zudem mittels eines ersten Abtriebslagers 36 und eines zweiten Abtriebslagers 37 betriebssicher innerhalb des Getriebes 100 gelagert.

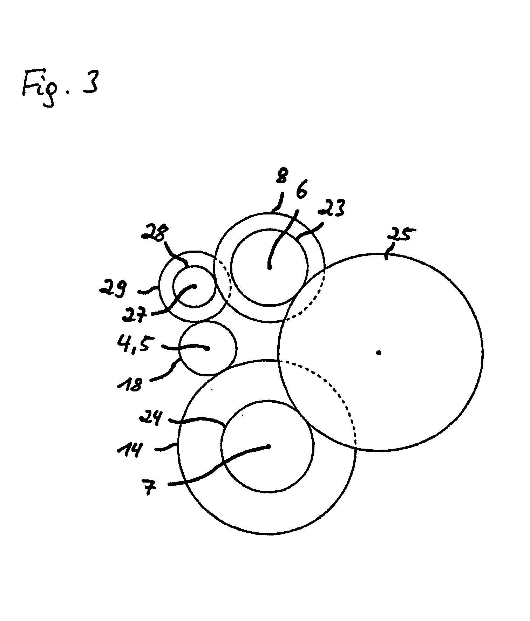

Bei der Darstellung nach der Figur 3 ist gut zu erkennen, wie die Verzahnung 25 des Differenzials 26 einerseits mit dem ersten Abtriebszahnrad 23 der ersten Vorgelegewelle 6 des Getriebes 100 und andererseits mit dem zweiten Abtriebszahnrad 24 der zweiten Vorgelegewelle 7 des Getriebes 100 kämmt.

An der ersten Vorgelegewelle 6 kämmt das erste Losrad 8 mit dem ersten Zwischenwellenfestrad 28 der Zwischenwelle 27, wobei das zweite Zwischenwellenfestrad 29 der Zwischenwelle 27 wiederum mit dem vierten Festrad 18 der zweiten Getriebeeingangswelle 5 wechselwirkt. Gleichzeitig kämmt das vierte Festrad 18 mit dem siebten Losrad 14 der zweiten Vorgelegewelle 7, wodurch der erste Gang G1 des Getriebes 100 gebildet ist.

Bei dem Getriebe 100 kann insbesondere das jeweilige den ersten Gang G1 und den Rückwärtsgang RG definierende Festrad 18 vorteilhafter Weise in unmittelbarer Nähe des Wellenlagers 30 platziert werden, wodurch Lasten außergewöhnlich gut minimiert werden, die beispielsweise während des Normalbetriebs oder auch bei Momentenwechseln an dem jeweiligen Getriebe 100 auftreten können. Insbesondere können die Zahneingriffskräfte bzw. Schwingungen minimiert werden, wie sie bei einem Momentenwechsel auftreten können.

### Bezugszeichenliste:

- 1: erste Kupplung
- 2: zweite Kupplung
- 3: Antriebswelle
- 4: erste Getriebeeingangswelle
- 5: zweite Getriebeeingangswelle
- 6: erste Vorgelegewelle
- 7: zweite Vorgelegewelle
- 8: erstes Losrad
- 9: zweites Losrad
- 10: drittes Losrad
- 11: viertes Losrad
- 12: fünftes Losrad
- 13: sechstes Losrad
- 14: siebtes Losrad
- 15: erstes Festrad
- 16: zweites Festrad
- 17: drittes Festrad
- 18: viertes Festrad
- 19: erste Koppelvorrichtung
- 20: zweite Koppelvorrichtung
- 21: dritte Koppelvorrichtung
- 22: vierte Koppelvorrichtung
- 23: erstes Abtriebszahnrad
- 24: zweites Abtriebszahnrad
- 25: Verzahnung
- 26: Differential
- 27: Zwischenwelle
- 28: erstes Zwischenwellenfestrad
- 29: zweites Zwischenwellenfestrad
- 30: erstes Wellenlager
- 31: zweites Wellenlager
- 32: drittes Wellenlager
- 33: viertes Wellenlager
- 34: fünftes Wellenlager
- 35: sechstes Wellenlager
- 36: erstes Abtriebslager
- 37: zweites Abtriebslager
- 38: Wellenende
- 100: Getriebe
- G1: erster Gang
- G2: zweiter Gang
- G3: dritter Gang
- G4: vierter Gang
- G5: fünfter Gang
- G6: sechster Gang
- RG: Rückwärtsgang

## Patentansprüche

1. Doppelkupplungsgetriebe mit zwei koaxial zueinander angeordneten Getriebeeingangswellen (4, 5), mit zwei Vorgelegewellen (6, 7), auf denen als Losräder (8, 9, 10, 11, 12, 13, 14) ausgebildete Gangzahnräder drehbar gelagert sind, mit auf den beiden Getriebeeingangswellen (4, 5) drehfest und in axialer Folge angeordneten sowie als Festräder (15, 16, 17, 18) ausgebildeten Gangzahnrädern, die mit den Losrädern (8, 9, 10, 11, 12, 13, 14) mittelbar oder unmittelbar in Zahneingriff stehen und hierdurch verschiedene Gänge definieren, mit Koppelvorrichtungen (19, 20, 21, 22), die drehfest und axial bewegbar auf den beiden Vorgelegewellen (6, 7) gelagert und mittels Stellvorrichtungen (19, 20, 21, 22) axial zu bewegen sind, um jeweils ein Losrad (8, 9, 10, 11, 12, 13, 14) drehfest mit der entsprechenden Vorgelegewelle (6, 7) zu verbinden, mit jeweils einem an den beiden Vorgelegewellen (6, 7) befestigten Abtriebszahnrad (23, 24), und mit zwei Kupplungen (1, 2), deren Eingangsseiten mit einer Antriebswelle (3) eines Antriebsmotors und deren Ausgangsseiten mit jeweils einer der beiden koaxial zueinander angeordneten Getriebeeingangswellen (4. 5) verbunden sind, wobei die Abtriebszahnräder (23, 24) mit einer Verzahnung (25) eines Abtriebs im Zahneingriff stehen, wobei ein Rückwärtsgang (RG) durch eine Zwischenwelle (27), auf welcher ein erstes Zwischenwellenfestrad (28), welches mit einem Losrad (8) der Losräder (8, 9, 10, 11, 12, 13, 14) unmittelbar in Zahneingriff steht, und ein zweites Zwischenwellenfestrad (29), welches mit einem den ersten Gang (G1) definierenden Festrad (18) der Festräder (15, 16, 17, 18) unmittelbar in Zahneingriff steht, drehfest angeordnet sind, definiert ist, wobei das den ersten Gang (G1) und den Rückwärtsgang (RG) definierende Festrad (18) in der axialen Folge axial außen angeordnet ist, wobei das den zweiten Gang (G2) definierende Festrad (15) axial außen auf der dem den ersten Gang (G1) und den Rückwärtsgang (RG) definierenden Festrad (18) abgewandten Seite der axialen Folge angeordnet ist, **dadurch gekennzeichnet, dass** das erste Zwischenwellenfestrad (28) auf axialer Höhe des den zweiten Gang (G2) definierenden Festrads (15) angeordnet ist, wobei die beiden Kupplungen (1, 2) axial auf gleicher Höhe oder axial mit einer Überlappung von mehr als 50%, und radial auf verschiedenen Radien zueinander angeordnet sind.

2. Doppelkupplungsgetriebe nach Anspruch 1, **dadurch gekennzeichnet, dass** das den ersten Gang (G1) und den Rückwärtsgang (RG) definierende Festrad (18) axial auf einer den Kupplungen (1, 2) abgewandten Seite der axialen Folge angeordnet ist.

3. Doppelkupplungsgetriebe nach Anspruch 1 oder 2. ***dadurch gekennzeichnet, dass*** das den zweiten Gang (G2) definierende Festrad (15) axial auf einer den Kupplungen (1, 2) zugewandten Seite der axialen Folge angeordnet ist.

4. Doppelkupplungsgetriebe nach einem der Ansprüche 1 bis 3, ***dadurch gekennzeichnet*, *dass*** das den ersten Gang (G1) und den Rückwärtsgang (RG) definierende Festrad (18) axial auf einer den Kupplungen (1, 2) zugewandten Seite der axialen Folge angeordnet ist.

5. Doppelkupplungsgetriebe nach einem der Ansprüche 1 bis 4, ***dadurch gekennzeichnet*, *dass*** das den zweiten Gang (G2) definierende Festrad (15) axial auf einer den Kupplungen (1, 2) abgewandten Seite der axialen Folge angeordnet ist.

6. Doppelkupplungsgetriebe nach einem der vorstehenden Ansprüche, ***dadurch gekennzeichnet*, *dass*** die mit dem den ersten Gang (G1) und den Rückwärtsgang (RG) definierenden Festrad (18) verbundene Kupplung (1, 2) radial außerhalb angeordnet ist.

7. Getriebe (100) nach einem der vorstehenden Ansprüche, ***dadurch gekennzeichnet*, *dass*** die beiden Getriebeeingangswellen (4, 5) miteinander kuppelbar sind.

8. Getriebe (100) nach einem der vorstehenden Ansprüche, ***dadurch gekennzeichnet*, *dass*** der Abtrieb ein Differential (26) umfasst.

## Claims

1. A dual-clutch transmission with two transmission input shafts (4, 5) arranged coaxially to each other, with two countershafts (6, 7) on which as toothed gear wheels designed as loose wheels (8, 9, 10, 11, 12, 13, 14) are rotatably mounted, with toothed gear wheels arranged on the two transmission input shafts (4, 5) in a rotationally fixed manner and in axial sequence and designed as fixed wheels (15, 16, 17, 18), which indirectly or directly ore in tooth engagement with the loose wheels (8, 9, 10, 11, 12, 13, 14)and because of this define different gears, with coupling devices (19, 20, 21, 22) which are mounted on the two countershafts (6, 7) in a rotationally fixed and axially moveable manner and are to be axially moved by means of actuation devices (19, 20, 21, 22)in order to in each case connect a loose wheel (8, 9, 10, 11, 12, 13, 14) to the respective countershaft (6, 7) in a rotationally fixed manner, with an output gear wheel (23, 24) each fastened to one of the two countershafts (6, 7), and with two clutches (1, 2) whose input sides are connected to a drive shaft (3) of a drive engine and whose output sides are each connected to one of the transmission input shafts (4, 5) arranged coaxially to each other, wherein the output gear wheels (23, 24) are in tooth engagement with a toothing (25) of an output, wherein a reverse gear (RG)is defined by an intermediate shaft (27), on which a first intermediate shaft fixed wheel (28), which is in direct tooth engagement with a loose wheel (8) of the loose wheels(8, 9, 10, 11, 12, 13, 14) and a second intermediate shaft fixed wheel (29),which is in direct tooth engagement with a fixed wheel (18) of the fixed wheels (15, 16, 17, 18), defining the first gear (G1) are arranged in a rotationally fixed manner, wherein the fixed wheel (18) defining the first gear (G1) and the reverse gear (RG) in the axial sequence is arranged axially outside, wherein the fixed wheel (15) defining the second gear (G2) is arranged axially outside on the side of the axial sequence facing away from the fixed wheel (18) defining the first gear G1) and the reverse gear (RG), **characterized in that** the first intermediate shaft fixed wheel (28) is arranged at the axial height of the fixed wheel (15) defining the second gear (G2), wherein the two clutches (1, 2) are arranged axially at the same height or axially with an overlap of more than 50% and radially on different radii to each another.

2. The dual-clutch transmission according to claim 1, **characterized in that** the fixed wheel (18) defining the first gear (G1) and the reverse gear (RG) is axially arranged on a side of the axial sequence facing away from the clutches (1, 2).

3. The dual-clutch transmission according to claim 1 or 2, **characterized in that** the fixed wheel (15) defining the second gear (G2) is axially arranged on a side of the axial sequence facing the clutches (1, 2).

4. The dual-clutch transmission according to claim 1 to 3, **characterized in that** the fixed wheel (18) defining the first gear (G1) and the reverse gear (RG) is axially arranged on a side of the axial sequence facing the clutches (1, 2).

5. The dual-clutch transmission according to claim 1 to 4 2, **characterized in that** the fixed wheel (15) defining the second gear (G2) is axially arranged on a side of the axial sequence facing away from the clutches (1, 2).

6. The dual-clutch transmission according to any one of the preceding claims, **characterized in that** the clutch (1, 2) connected to the fixed wheel (18) defining the first gear (G1) and the reverse gear (RG) is arranged radially outside.

7. A transmission according to any one of the preceding claims, **characterized in that** the two transmission input shafts (4, 5) can be coupled together.

8. The transmission according to any one of the preceding claims, **characterized in that** the output comprises a differential (26)

## Revendications

1. Boîte de vitesses à double embrayage comprenant deux arbres d'entrée de boîte de vitesses (4, 5) disposés réciproquement de façon coaxiale, deux arbres intermédiaires (6, 7), sur lesquels des roues dentées de vitesse conçues sous forme de roues mobiles (8, 9, 10, 11, 12, 13, 14) sont montées de façon rotative, des roues dentées de vitesse disposées de façon solidaire en rotation sur les deux arbres d'entrée de boîte de vitesses (4, 5) et dans une succession axiale et conçues sous forme de roues fixes (15, 16, 17, 18), lesquelles roues sont en engrènement indirectement ou directement avec les roues libres (8, 9, 10, 11, 12, 13, 14) et définissent ainsi différentes vitesses, des dispositifs d'embrayage (19, 20, 21, 22), qui sont montés de façon solidaire en rotation et axialement mobiles sur les deux arbres intermédiaires (6, 7) et peuvent être déplacés axialement au moyen de dispositifs de positionnement (19, 20, 21, 22), afin de relier à chaque fois une roue mobile (8, 9, 10, 11, 12, 13, 14) de façon solidaire en rotation avec l'arbre intermédiaire (6, 7) correspondant, comprenant à chaque fois une roue dentée de sortie (23, 24) fixée sur les deux arbres intermédiaires (6, 7) et deux embrayages (1, 2), dont les côtés d'entrée sont reliés par un arbre d'entraînement (3) d'un moteur d'entraînement et les côtés de sortie à respectivement l'un des deux arbres d'entrée de boîte de vitesses (4, 5) disposés réciproquement de façon coaxiale, les roues dentées de sortie (23, 24) étant en engrènement avec une denture (25) d'une sortie, une marche arrière (RG) étant définie par un arbre intermédiaire (27), sur lequel une première roue fixe d'arbre intermédiaire (28), qui est en engrènement direct avec une roue mobile (8) des roues mobiles (8, 9, 10, 11, 12, 13, 14), et une seconde roue fixe d'arbre intermédiaire (29), qui est en engrènement direct avec une roue fixe (18) définissant la première vitesse (G1), des roues fixes (15, 16, 17, 18), sont disposées de façon solidaire en rotation, la roue fixe (18) définissant la première vitesse (G1) et la marche arrière (RG) étant disposée axialement à l'extérieur dans la séquence axiale, la roue fixe (15) définissant la seconde vitesse (G2) étant disposée axialement à l'extérieur sur le côté de la séquence axiale qui est opposé à la roue fixe (18) définissant la première vitesse (G1) et la marche arrière (RG), **caractérisée en ce que** la première roue fixe d'arbre intermédiaire (28) est disposée à hauteur axiale de la roue fixe (15) définissant la seconde vitesse (G2), les deux embrayages (1, 2) étant disposés l'un par rapport à l'autre axialement à la même hauteur ou axialement avec un chevauchement de plus de 50 % et radialement sur différents rayons.

2. Boîte de vitesses à double embrayage selon la revendication 1, **caractérisée en ce que** l'arbre fixe (18) définissant la première vitesse (G1) et la marche arrière (RG) est disposé axialement sur un côté, opposé aux embrayages (1, 2), de la séquence axiale.

3. Boîte de vitesses à double embrayage selon la revendication 1 ou 2, **caractérisée en ce que** la roue fixe (15) définissant la seconde vitesse (G2) est disposée axialement sur un côté, tourné vers les embrayages (1, 2), de la séquence axiale.

4. Boîte de vitesses à double embrayage selon l'une quelconque des revendications 1 à 3, **caractérisée en ce que** la roue fixe (18) définissant la première vitesse (G1) et la marche arrière (RG) est disposée axialement sur un côté, tourné vers les embrayages (1, 2), de la séquence axiale.

5. Boîte de vitesses à double embrayage selon l'une quelconque des revendications 1 à 4, **caractérisée en ce que** la roue fixe (15), définissant la seconde vitesse (G2), est disposée axialement sur un côté, opposé aux embrayages (1, 2), de la séquence axiale.

6. Boîte de vitesses à double embrayage selon l'une quelconque des revendications précédentes, **caractérisée en ce que** l'embrayage (1, 2), relié à la roue fixe (18) définissant la première vitesse (G1) et la marche arrière (RG) est disposé radialement à l'extérieur.

7. Boîte de vitesses (100) selon l'une quelconque des revendications précédentes, **caractérisée en ce que** les deux arbres d'entrée de boîte de vitesses (4, 5) peuvent être couplés l'un avec l'autre.

8. Boîte de vitesses (100) selon l'une quelconque des revendications précédentes, **caractérisée en ce que** la sortie comprend un différentiel (26).
